. Europäisches Patentamt

European Patent Office

Office européen des brevets

(11) Veröffentlichungsnummer: **0 216 979**
**B1**

(12) **EUROPÄISCHE PATENTSCHRIFT**

(45) Veröffentlichungstag der Patentschrift: **18.04.90**

(21) Anmeldenummer: **86101108.8**

(22) Anmeldetag: **28.01.86**

(51) Int. Cl.⁵: **A 01 G 9/22**

(54) **Vorrichtung zum Betreiben einer Schattierungs- bzw. Wärmedämmanlage in Gewächshäusern od.dgl.**

(30) Priorität: **23.09.85 DE 3533836**
**16.11.85 DE 3540758**

(43) Veröffentlichungstag der Anmeldung:
**08.04.87 Patentblatt 87/15**

(45) Bekanntmachung des Hinweises auf die
Patenterteilung:
**18.04.90 Patentblatt 90/16**

(84) Benannte Vertragsstaaten:
**AT BE CH DE FR GB LI NL SE**

(56) Entgegenhaltungen:
**FR-A-1 586 497**
**GB-A-2 088 941**
**NL-A-7 908 872**

(73) Patentinhaber: **Heescher, Felix**
**Rodder Strasse 31**
**D-4446 Hörstel-Bevergern (DE)**

(72) Erfinder: **Heescher, Felix**
**Rodder Strasse 31**
**D-4446 Hörstel-Bevergern (DE)**

(74) Vertreter: **Habbel, Hans-Georg, Dipl.-Ing.**
**Postfach 3429 Am Kanonengraben 11**
**D-4400 Münster (DE)**

## Beschreibung

Die Erfindung bezieht sich auf eine Vorrichtung bei großen Glasflächen aufweisenden Gebäuden, wie beispielsweise Gewächshäuser od. dgl. gemäß dem Oberbegriff des Hauptanspruches.

Es sind, insbesondere in Gewächshäusern, mit Schattierungsgewebe arbeitende Installationen bekannt, die es ermöglichen, in Abhängigkeit der Sonneneinstrahlung mehr oder weniger der Glasflächen abzudecken und dadurch die Sonneneinstrahlung mehr oder weniger zu begrenzen.

Als Folge der ersten Ölkrise wurde dann mittels dieser Schattierungsanlagen auch eine Wärmedämmung versucht, die jedoch nur sehr schwer zu realisieren war, da für eine gute Schattierungsanlage Gewebe mit hoher Luftdurchlässigkeit einzusetzen sind, aber als Wärmedämmanlagen andere Materialien verwendet werden müssen, die Platten, Folien od. dgl.

Die Entwicklung führte dann dazu, daß die Schattieranlagen aus verhältnismäßig dichten Materialien eingesetzt wurden, so daß zwar bis zu 40 bzw. 50% Wärmeenergie eingespart werden konnte, wobei sich aber als nachteilig herausstellte, daß in den Sommermonaten unter diesen Schattierungsanlagen eine hohe Wärmeentwicklung stattfand, die unerwünscht ist.

Die ideale Anordnung wäre derart, daß einerseits mit derartigen Schattierungsanlagen optimale Wärmedämmungen erreicht werden, ein möglichst hoher lichtdurchlässiger Wärmeschirm bei Minustemperaturen am Tage im Winter erreicht wird, eine Sonnenschutzabdeckung hoher Luftdurchlässigkeit mit leichtem Schattierwert von ca. 20 bis 30% und möglichst reflektierend eingesetzt wird und das Sonnenschutzmaterial mit 30 bis 50% Schattierungseffekt bei sehr intensiver Sonneneinstrahlung einsetzbar ist.

Es ist offensichtlich, daß mit den bisher bekannten Anlagen diese Optimierung nicht zu erreichen ist.

Der Erfindung liegt die Aufgabe zugrunde, eine kostengünstige Vorrichtung, z.B. für Gewächshäuser, zu schaffen, mit der unterschiedliche Wärmedämmeffekte und unterschiedliche Schattierungseffekte erreichbar sind, ohne daß der Installationsaufwand, insbesondere der motorische Einsatz, zu hoch wird.

Diese der Erfindung zugrundeliegende Aufgabe wird durch die Lehre des kennzeichnenden Teil des Anspruchs 1 gelöst.

Vorteilhafte Ausgestaltungen sind in den Unteransprüchen erläutert.

Mit anderen Worten ausgedrückt: Ausgehend von den zum Stand der Technik gehörenden, mit Quer- und Schubstangen arbeitenden, über eine einzige motorische Antriebseinheit angetriebenen Schattierungsanlagen wird vorgeschlagen, mit einer solchen Anlage nicht nur ein einziges Schattierungsgewebe zu betätigen, sondern mit einer solchen Anlage mehrere unterschiedlich gestaltete Wärmedämm-bzw. Schattiermaterialien zu betätigen, wobei entweder jedes einzelne der vier Materialien unter das Glasdach gezogen werden kann oder auch die Kombination von zwei eingesetzten Materialsorten möglich ist.

Dadurch, daß der Betrieb der vier unterschiedlichen Wärmedämm- bzw. Schattiermaterialien nur mit einer Schubstange möglich ist, wird der Aufwand für den Antrieb der Anlage nicht viel höher als bei den bisher bekannten Anlagen, wobei lediglich zusätzlich zu den bekannten Anlagen der Aufwand für die vier unterschiedlichen Materialien und der Aufwand für den Drehantrieb der Schubstange kommt.

Ein Ausführungsbeispiel der Erfindung wird nachfolgend anhand der Zeichnungen erläutert. Die Zeichnungen zeigen dabei in

Fig. 1 zur Verdeutlichung der Erfindung eine schematische Draufsicht auf eine Schattierungsanlage wie sie zum Stand der Technik gehört, in

Fig. 2 zur Verdeutlichung der Erfindung einem Ausschnitt aus einer Anlage mit vier unterschiedlich enigesetzten Wärmedämm- bzw. Schattiermaterialien, in

Fig. 3 eine Ansicht auf eine Federarretierung und in

Fig. 4 eine Ansicht auf die Lagerung für die Schubstange.

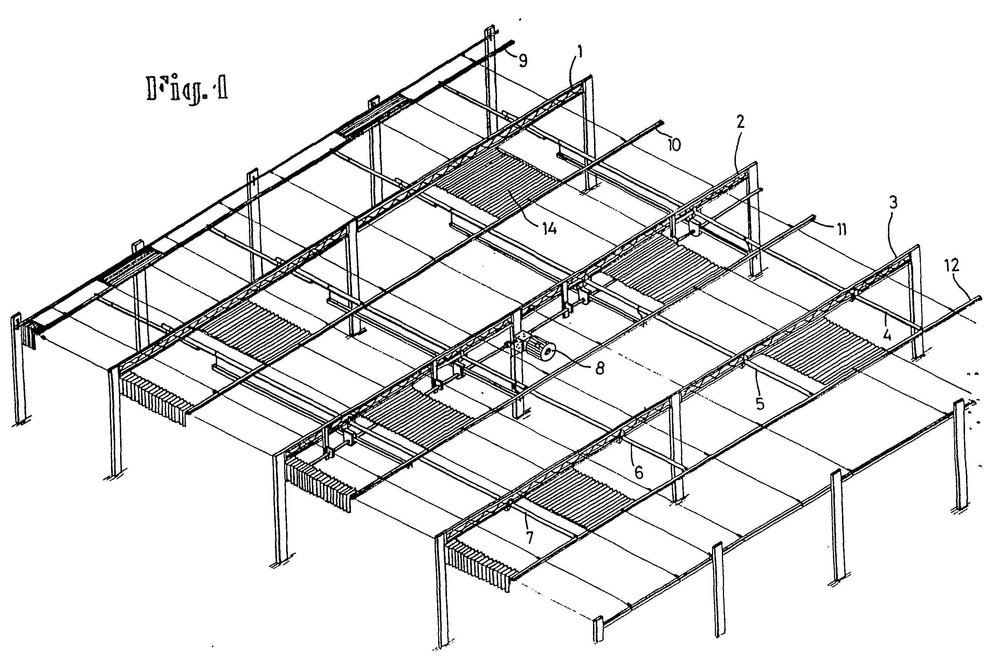

In Fig. 1 sind mit 1 , 2 und 3 drei Querträger bezeichnet, die quer über die Länge eines Gewächshauses reichen und die auf entsprechenden ortsfesten Ständern angeordnet sind. Diese Querträger tragen quer zu ihrer Längsachse verschiebliche gelagerte Schubstangen 4, 5, 6 und 7, die in eine in ihrer Längsachse ausgerichtete hin- und hergehende Bewegung über eine zentrale motorische Antriebseinheit 8 antreibbar sind.

An die Schubstangen 4 bis 7 schließen sich parallel zu den Querträgern 1, 2 und 3 erstrekende Qeurstangen 9, 10, 11 und 12 an, die quer zu ihrer Längsachse verschieblich im Gebäude getragen werden, beispielsweise an entsprechenden Haltedrähten od. dgl. Die Bewegung der Schubstangen 4, 5, 6 und 7 wird auf die Querstangen 9 bis 12 übertragen, so daß diese Querstangen 9 bis 12 sich nunmehr parallel zu den Querträgern 1 bis 3 verschieben lassen.

An den Querträgern 1 bis 3 festgelegt sind Wärmedämm- bzw. Schattiermaterialien 14, die mit ihrem anderen Ende an die Querstangen 9 bis 12 anschliessen und so bei Bewegung der Querstangen 9 bis 12 aus einer zieharmonikaartig zusammengeschobenen Lage in eine ausgezogene Lage bewegt werden können und dadurch eine Schattierung bewirken.

Wie aus der Darstellung in Fig. 1 erkennbar, ist die dargestellte große Fläche aufgrund dieser vorbeschriebenen Anordnung nur mit einer motorischen Antriebseinheit 8 schattierbar.

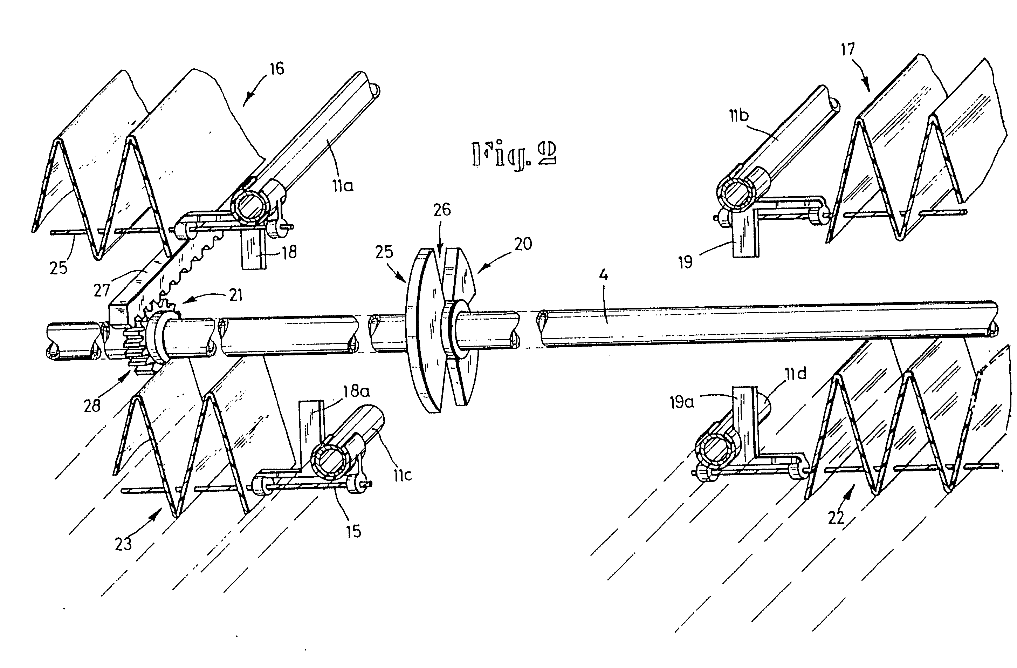

Bei der erfindungsgemäßen Ausführungsform, so wie sie in Fig. 2 dargestellt ist, sind oberhalb der Schubstange 4 auf entsprechenden Haltedrähten 15 angeordnet, z.B. Schattierungsgewebe 16 und 17 vorgesehen, wobei aufgrund seiner Ausbildung das Schattierungsgewebe 16 z.B. eine Schattierung von 10% und das Schattierungsgewebe 17 beispielsweise eine Schattierung von 30% bewirkt, d.h. dichter ist. Die mit diesen Schattierungsgeweben 16 und 17 verbundenen Querstangen 11a und 11b weisen nach unten gerichtet Mitnehmer 18 und 19 auf. Auf der Schubstange 4 ist eine Mitnehmerscheibe 20 angeordnet, die geschlossene Bereiche 25 und freie Durchtrittsbereiche 26 aufweist, wobei bei 21 der für eine Drehbewegung der Schubstange 4 erforderliche Drehantrieb erkennbar ist. Mit diesem aus einer Zahnstange 27 und einem Zahnrad 28 gebildeten Drehantrieb 21 können alle die in Fig. 1 dargestellten Schubstangen 4, 5, 6 und 7 mit einer einzigen motorischen Antriebseinheit betätigt werden.

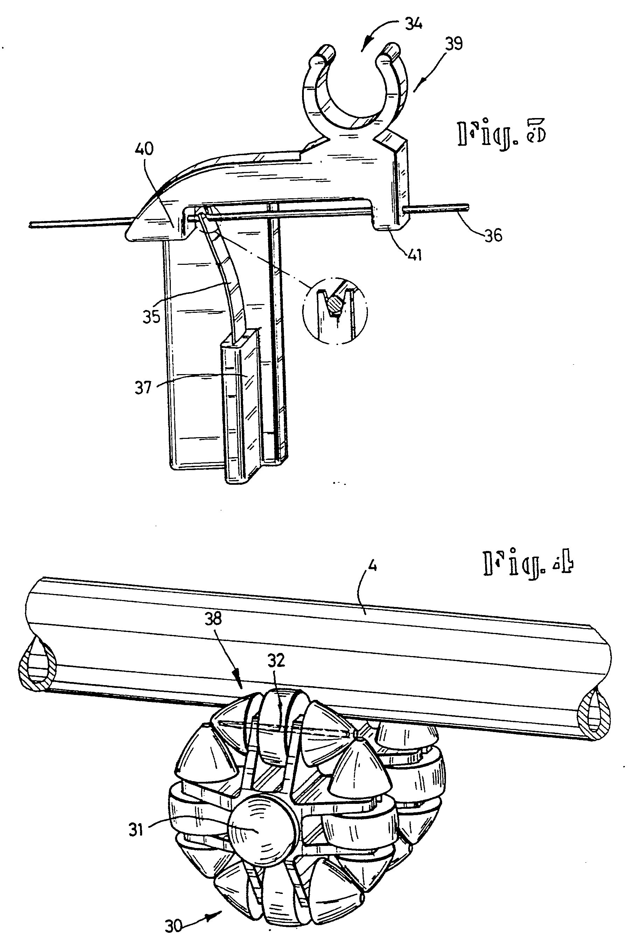

Fig. 4 zeigt im Beispiel der Schubstange 4, daß die Schubstangen auf Laufrollen gelagert sind, die eine Drehbewegung quer zur Schubstangenlängsachse und parallel zur Schubstangenlängsachse ermöglichen, indem die Laufrollen einmal um die quer zur Schubstangenlängsachse gerichtete Achse 31 drehbar gelagert sind und an ihrem Außenumfang Rollenkörper 38 tragen, die fest mit dem Laufrad 30 verbunden sind, aber sich um parallel zur Längsachse der Schubstange erstreckende Achsen 32 drehen können. Derartige Bauteile können kostengünstig aus Kunststoff hergestellt werden und ermöglichen eine sichere und einwandfreie Lagerung der Schubstangen.

Anstelle der voraufgehend anhand von Fig. 2 beschriebenen Stelleinrichtung, nämlich der Mitnehmerscheibe 25, können natürlich auch einzelne Mitnehmer vorgesehen werden, die nicht scheibenförmig ausgebildet sind, jedoch in der Lage sind, die voraufgehend an der Mitnehmerscheibe 20 beschriebene Funktion zu erfüllen.

In Fig. 3 ist schließlich ein Hilfsmittel dargestellt, mit dem die verschiedenen Wärmedämm- bzw. Schattiermaterialien in ihrer jeweils eingestellten Lage gehalten werden können.

Hierzu wird eine Federarretierung 34 vorgesehen, die aus einer Tragplatte besteht, die über einen Clip 39, beispielsweise an der Schubstange 11a, festgelegt werden kann. Nach unten gerichtet ist im Bereich des Clips eine Führung vorgesehen, die aus zwei im Abstand voneinander angeordneten Flanschen 40 und 41 besteht, durch die ein Draht 36 geführt ist. An der Unterseite dieses Drahtes liegt eine an einer ortsfesten Lagerung 37 vorgesehen Federzunge 35 an, wobei die Länge der Federzunge etwas größer als der Abstand vom Draht 36 zur ortsfesten Lagerung 37 ist, so daß bei einer Bewegung des Drahtes 36 die Federzunge 36 über ihre Totpunktlage gezogen werden muß. Bei der in Fig. 3 dargestellten Stellung steht die Federzunge 35 so, daß eine Bewegung der von dem Draht 36 getragenen Wärmedämm- und Schattiermaterialien nach rechts nicht möglich ist, sondern die Feder blockiert diese Bewegung. Wird nunmehr der Draht gezogen, bewegt sich die Feder über ihre Mittellage in eine Lage, die entgegengesetzt der Stellung ist, die in Fig. 3 dargestellt ist und bewirkt, daß eine Zurückbewegung des Drahtes dann ebenfalls ausgeschlossen ist. Auch diese Federarretierung 34 ist im Kunststoffspritzguß leicht herzustellen, damit sehr kostengünstig, bewirkt aber, daß die hin und her zu bewegenden Wärmedämm- und Schattiermaterialien in ihrer einmal eingestellten Lage verharren, aber aus dieser Lage ohne größen Stellaufwand wieder entfernt werden können. Die Federzunge 35 kann dabei aus Metall bestehen.

Unterhalb der Schubstange 4 ist ein weiteres Schattierungsgewebe 23 und ein Wärmedämmaterial 22 vorgesehen, wobei das Material 22 einen hohen Wärmedämmeffekt aufweisen kann, während das Schattierungsgewebe 23 eine 50%ige Schattierung bewirkt. An den zugeordneten Querstangen 11c und 11d sind Mitnehmernocken 18a und 19a vorgesehen, die nach oben gerichtet sind und in den Weg der Mitnehmerscheibe 20 gelangen können.

Aus der voraufgehenden Beschreibung ist erkennbar, daß mit der erfindungsgemäßen Anordnung nunmehr in einem Gewächshaus die Möglichkeit gegeben wird, durch entsprechende Drehbewegung der Schubstange 4 beispielsweise den geschlossenen Bereich 25 mit dem Mitnehmer 18 in Verbindung zu bringen, wobei dann bei einer Bewegung der Schubstange 4 in deren Längsachse das Schattierungsgewebe 16 zugezogen werden kann. Hierbei sind die offenen Bereiche 26 so auf der Mitnehmerscheibe angeordnet, daß der Mitnehmer 18a des Schattierungsgewebes 23 bzw. der Querstange 11c nicht ergriffen wird.

Wird nunmehr das Schattierungsgewebe 16 bis zur Querstange 11b verfahren, wird die Glasfläche nur durch das Schattierungsgewebe 16 abgedeckt.

Es ist in gleicher Weise aber auch möglich, die Schubstange so zu verfahren, daß bei der Bewegungsrichtung in entgegengesetzter Richtung die Mitnehmerscheibe 20 über einen geschlossenen Bereich 25 den Mitnehmer 19 des Schattierungsgewebes 17 mitnimmt und nun dieses einen höheren Schattierungseffekt bewirkende Schattierungsgewebe vor die Glasfläche zieht.

In genau derselben Weise ist eine entsprechende Betätigung der Schattierungsgewebe 23 bzw. des Wärmedämmaterials 22 möglich und es ist möglich, mit dem Schattierungsgewebe 16 beispielsweise zusätzlich das Schattierungsgewebe 23 zuzuziehen, so daß die unterschiedlichsten Effekte eingestellt werden können.

Alle diese unterschiedlichen Effekte werden aber erreicht, indem wie bisher die gleichen Schubstangen eingesetzt werden, nur daß die Schubstangen nunmehr zusätzlich gedreht, mit einem Mitnehmer 20 ausgerüstet und die Querstangen 11a bis 11d mit entsprechenden Mitnehmern 18 und 19 bzw. 18a und 19a auszurüsten sind. Der materielle Aufwand zur Erzielung des erfindungsgemäß angestrebten und erreichten hohen Effektes ist also relativ gering.

## Patentansprüche

1. Vorrichtung zum Betreiben einer Schattierungs- und/oder Wärmedämmanlage in mit großen Glasflächen versehenen Gebäuden, wie Gewächshäuser od. dgl. mit unter den Glasflächen verschiebbar angeordneten, z.B. von Haltedrähten (15) getragenen Wärmedämm- bzw. Schattiermaterialien (14, 16, 17, 22, 23), die an ortsfesten Querträgern (1, 2, 3) einenendes befestigt sind und anderenendes an parallel zur Längserstreckung der Querträger (1, 2, 3), ausgerichteten Querstangen (9, 10, 11, 12) anschließen, die über eine motorische Antriebseinheit (8) quer zur Längserstreckung der Querträger (1, 2, 3) hin und her bewegbar sind, wobei die motorische Antriebseinheit (8) auf die Querstangen (9, 10, 11, 12) über quer zu den Querträgern (1, 2, 3) und Querstangen (9, 10, 11, 12) verlaufenden Schubstangen (4, 5, 6, 7) wirkt, dadurch gekennzeichnet, daß

a) zwischen den durch die Querträger (1, 2, 3) gebildeten Feldern wenigstens zwei Querstangen (11a, 11b, 11c, 11d) angeordnet sind und an den beiden ein Feld begrenzenden Quertragern (1, 2, 3) wenigstens je ein unterschiedlich zu einem anderen gestaltetes Wärmedämm- bzw. Schattiermaterial (16, 17, 22, 23) anschließt,

b) jede Querstange (11a, 11b, 11c, 11d) im Bewegungsbereich einer Schubstange (4, 5, 6, 7) mit einem Mitnehmer (18, 19, 18a, 19a) ausgerüstet ist,

c) die Schubstange (4, 5, 6, 7) eine in den Weg des Mitnehmers (18, 19, 18a, 19a) der Querstange (11a, 11b, 11c, 11d) ragende Mitnehmer anordnung (20) aufweist,

d) die Schubstange (4) mit der fest darauf angeordneten Mitnehmer anordnung (20) von der motorischen Antriebseinheit (8) drehbar ist.

2. Vorrichtung nach Anspruch 1, dadurch gekennzeichnet, daß die Mitnehmer anordnung als Mitnehmerscheibe (20) ausgebildet ist, die aus geschlossenen Bereichen (25) und zum Umfang hin offenen Bereichen (26) besteht.

3. Vorrichtung nach Anspruch 1 und 2, dadurch gekennzeichnet, daß die Wärmedämm- bzw. Schattiermaterialien (16, 17, 22, 23) oberhalb und unterhalb der Schubstange (4) angeordnet sind, wobei die oberhalb der Schubstange (4) angeordneten Querstangen (11a, 11b) mit nach unten ragenden Mitnehmern (18, 19) und die unterhalb der Schubstange (4) angeordneten Querstangen (11c, 11d) mit nach oben ragenden Mitnehmern (18a, 19a) ausgerüstet sind.

4. Vorrichtung nach Anspruch 1 bis 3, dadurch gekennzeichnet, daß die in einem durch die Querträger (1) gebildeten Feld angeordneten Wärmedämm- bzw. Schattiermaterialien (16, 17, 22, 23) unterschiedliche Wärmedämm- bzw. Schattierungseigenschaften aufweisen.

5. Vorrichtung nach einem oder mehreren der vorhergehenden Ansprüche, gekennzeichnet durch einen Zahnstangen- und Zahnradantrieb (21) für die Drehbewegung der Schubstange (4).

6. Vorrichtung nach Anspruch 1, dadurch gekennzeichnet, daß die Schubstange (4) auf Laufrollen (30) gelagert ist, die um quer zur Schubstangenlängsachse und parallel zur Schubstangenlängschse ausgerichtete Achsen (31, 32) drehbar sind.

7. Vorrichtung nach Anspruch 1, gekennzeichnet durch eine Federarretierung (34) für die Wärmedämm- bzw. Schattiermaterialien mit einer Schnappfeder (35), die einenendes ortsfest gelagert ist und deren freies Ende an einem durch die Federarretierung (34) geführten Haltedraht (36) anliegt, wobei die Länge der Feder größer als der Abstand vom Haltedraht (36) zur ortsfesten Lagerung (37) ist, derart, daß bei Bewegungen des Haltedrahtes (36) gegenüber der ortsfesten Lagerung (37) bzw. der Federarretierung (34) die Feder (35) aus einer Sperrstellung in eine Gleitstellung gelangt, in der sie die Rückbewegung des Drahtes (36) verhindert.

**Revendications**

1. Dispositif pour manoeuvrer une installation d'occultation et/ou d'isolation thermique dans des bâtiments possédant de grandes surfaces vitrées, tels que les serres ou équivalents, comprenant des matières d'isolation thermique ou d'occultation (14, 16, 17, 22, 23) disposées pour pourvoir coulisser sous les surfaces vitrées, par exemple, portées par des fils métalliques de retenue (15), qui sont attachées à des poutres transversales fixes (1, 2, 3) à une extrémité, tandis qu'à l'autre extrémité, elles sont attachées à des tringles transversales (9, 10, 11, 12) orientées parallèlement à l'extension longitudinale des poutres transversales (1, 2, 3), et qui peuvent se déplacer alternativement dans les deux sens dans une direction transversale à l'extension longitudinal des poutres transversales (1, 2, 3) sous l'action d'une unité d'entraînement à moteur (8), l'unité d'entraînement à moteur (8) agissant sur les tringles transversales (9, 10, 11, 12) par l'intermédiaire de poussoirs (4, 5, 6, 7) qui s'étendant transversalement aux poutres transversales (1, 2, 3) et aux tringles transversales (9, 10, 11, 12), caractérisé en ce que:

a) au moins deux tringles transversales (11a, 11b, 11c, 11d) sont disposées entre deux zones formées par des poutres transversales (1, 2, 3) et, à chacune des deux poutres transversales (1, 2, 3) qui délimitent une zone, est attachée au moins une matière d'isolation thermique ou d'occultation (16, 17, 22, 23) qui est d'une constitution différente de celle d'une autre;

b) chaque tringle transversale (11a, 11b, 11c, 11d) est équipée d'un taquet d'entraînement (18, 19, 18a, 19a) placé dans la zone du déplacement d'un poussoir (4, 5, 6, 7);

c) le poussoir (4, 5, 6, 7) présente un dispositif d'entraînement (20) qui fait saillie sur le trajet du taquet d'entraînement (18, 19, 18a, 19a) de la tringle transversale (11a, 11b, 11c, 11d); dispositif d'entraînement (20) monté rigidement sur ce poussoir, par l'unité d'entraînement à moteur (8).

2. Dispositif selon la revendication 1, caractérisé en ce que le dispositif d'entraînement est constitué par un disque d'entraînement (20) qui est composé de zones fermées (25) et de zones (26) qui s'ouvrent sur sa périphérie.

3. Dispositif selon l'une des revendications 1 et 2, caractérisé en ce que les matières d'isolation thermique ou d'occultation (16, 17, 22, 23) sont disposées au-dessus et au-dessous du poussoir (4), les tringles transversales (11a, 11b) disposées au-dessous du poussoir (4) étant équipées de taquets d'entraînement (18, 19) qui font saillie vers le bas et les tringles transversales (11c, 11d) disposées au-dessous du poussoir (4) étant équipées de taquets d'entraînement (18a, 19a) qui font saillie vers le haut.

4. Dispositif selon l'une des revendications 1 à 3, caractérisé en ce que les matières d'isolation thermique ou d'occultation (16, 17, 22, 23) disposées dans une même zone formée par les poutres transversales (1) présentent des propriétés d'isolation thermique ou d'occultation différentes.

5. Dispositif selon une ou plusieurs des revendications précédentes, caractérisé par un entraînement à crémaillère et roue dentée (21) servant à faire tourner le poussoir (4).

6. Dispositif selon la revendication 1, caractérisé en ce que le poussoir (4) est monté sur des galets de roulement (30) qui peuvent tourner autour d'axes (31, 32) orientés transversalement à l'axe longitudinal des poussoirs et autour d'axes orientés parallèlement à l'axe longitudinal des poussoirs.

7. Dispositif selon la revendication 1, caractérisé par un arrêt à ressort (34) pour les matières d'isolation thermique ou d'occultation, arrêt qui comprend un ressort d'encliquetage (35) qui est monté en un point fixe à une extrémité et dont l'extrémité libre est appuyée contre un fil de retenue (36) qui est enfilé à travers l'arrêt à ressort (34), la longueur du ressort étant supérieure à la distance séparant le fil de retenue (36) de son point de montage fixe (37) de telle manière que, en réponse à des déplacements du fil de retenue (36) par rapport au point de montage fixe (37) ou par rapport à l'arrêt à ressort (34), le ressort (35) passe d'une portion de blocage à une position de glissement dans laquelle il s'oppose au mouvement inverse du fil (36).

**Claims**

1. Apparatus for operating a shading and/or heat-insulating system in buildings having large glass surfaces, such as greenhouses or the like, with heat-insulating or shading materials (14, 16, 17, 22, 23) which are arranged displaceably under the glass surfaces and are supported, for example, by holding wires (15), and which at one end are fastened to fixed crossmembers (1, 2, 3) and at the other end are attached to transverse rods (9, 10, 11, 12) aligned parallel relative to the longitudinal extension of the crossmembers (1, 2, 3) and movable to and fro transversely relative to the longitudinal extension of the crossmembers (1, 2, 3) via a motor drive unit (8), the motor drive unit (8) acting on the transverse rods (9, 10, 11, 12) via connecting rods (4, 5, 6, 7) extending transversely relative to the crossmembers (1, 2, 3) and transverse rods (9, 10, 11, 12) characterized in that

a) at least two transverse rods (11a, 11b, 11c, 11d) are arranged between the zones formed by the crossmembers (1, 2, 3), and attached to each of the two crossmembers (1, 2, 3) limiting a particular zone is at least one heat-insulating or shading material (16, 17, 22, 23) formed differently from another,

b) each transverse rod (11a, 11b, 11c, 11d) is equipped with an engaging means (18, 19, 18a, 19a) in the region of movement of a connecting rod (4, 5, 6, 7),

c) the connecting rod (4, 5, 6, 7) has an engaging means arrangement (20) projecting into the path of the engaging means (18, 19, 18a, 19a) of the transverse rods (11a, 11b, 11c, 11d),

d) the connecting rod (4) can be rotated by the engaging means arrangement (20) arranged fixedly on it by the motor drive unit (8).

2. Apparatus according to Claim 1, characterized in that engaging means arrangement is designed as a carrier disc (20) which consists of closed regions (25) and regions (26) open towards the periphery.

3. Apparatus according to Claims 1 and 2, characterized in that the heat-insulating or shading materials (16, 17, 22, 23) are arranged above and below the connecting rod (4), and the transverse rods (11a, 11b) arranged above the connecting rod (4) are equipped with downward-projecting engaging means (18, 19) and the transverse rods (11c, 11d) arranged below the connecting rod (4) are equipped with upward-projecting engaging means (18a, 19a).

4. Apparatus according to Claims 1 to 3, characterized in that the heat-insulating or shading materials (16, 17, 22, 23) arranged in a zone formed by the crossmembers (1) have differing heat-insulating or shading properties.

5. Apparatus according to one or more of the preceding claims, characterized in that there is a rack-and-pinion drive (21) for the rotary movement of the connecting rod (4).

6. Apparatus according to Claim 1, characterized in that the connecting rod (4) is mounted on rollers (30) which are rotatable about axes (31, 32) aligned transversely relative to the longitudinal axis of the connecting rod and parallel to the longitudinal axis of the connecting rod.

7. Apparatus according to Claim 1, characterized in that there is a spring retention means (34) for the heat-insulating or shading materials, with a catch spring (35) which at one end is mounted fixedly in place and the free end of which rests against a holding wire (36) guided through the spring retention means (34), the length of the spring being greater than the distance between the holding wire (36) and the fixed mounting (37), so that, during movement of the holding wire (36) relative to the fixed mounting (37) or relative to the spring retention means (34), the spring (35) moves out of a blocking position into a sliding position, in which it prevents a return movement of the wire (36).

Fig. 1

Fig. 2

EP 0 216 979 B1

Fig. 5

Fig. 4